# EUROPÄISCHE PATENTSCHRIFT

(11) **EP 0 735 945 B1**
(45) Veröffentlichungstag und Bekanntmachung des Hinweises auf die Patenterteilung: **02.04.1997**
(21) Anmeldenummer: 95903699.7
(22) Anmeldetag: 20.12.1994
(51) Int. Cl.: B29C 47/66, B29C 47/58

(54) **VORRICHTUNG ZUM AUFBEREITEN THERMOPLASTISCHEN KUNSTSTOFFGUTES**
DEVICE FOR PROCESSING THERMOPLASTIC MATERIALS
DISPOSITIF DE TRAITEMENT DE MATIERES THERMOPLASTIQUES

(30) Priorität: 21.12.1993 AT 2577/93; 16.12.1994 AT 2349/94
(43) Veröffentlichungstag der Anmeldung: 09.10.1996
(73) Patentinhaber: BACHER, Helmut, A-4490 St. Florian (AT); SCHULZ, Helmuth, A-4490 St. Florian (AT); WENDELIN, Georg, A-4033 Linz (AT)
(72) Erfinder: BACHER, Helmut, A-4490 St. Florian (AT); SCHULZ, Helmuth, A-4490 St. Florian (AT); WENDELIN, Georg, A-4033 Linz (AT)
(74) Vertreter: Wildhack, Helmut, Dipl.-Ing. Dr.
(86) Internationale Anmeldenummer: AT9400199
(87) Internationale Veröffentlichungsnummer: WO9517293

(56) Entgegenhaltungen:
- EP-A- 0 171 756
- WO-A-93/25312
- DE-A- 2 112 306
- DE-A- 3 227 983
- DE-A- 3 233 841
- DE-C- 917 571
- US-A- 4 222 728

## Beschreibung

Die Erfindung bezieht sich auf eine Vorrichtung zum Aufbereiten thermoplastischen Kunststoffgutes, insbesondere in Folienform, wie Folienreste, Säcke, Taschen usw., mit einer Einzugsöffnung in der Mantelwand des Gehäuses einer Schnecke, die das in das Gehäuse eingebrachte Kunststoffgut zumindest fördert, vorzugsweise auch plastifiziert, in welche Einzugsöffnung das Kunststoffgut durch eine Zubringeeinrichtung eingebracht wird, wobei das Gehäuse der Schnecke an seiner Innenwand mit breiten Taschen versehen ist, die in Längsrichtung der Schnecke oder gekrümmt zumindest über den Großteil des axialen Bereiches der Einzugsöffnung verlaufen und die Schnecke, im Schnitt normal zur Schneckenachse gesehen, entlang von Kreisringabschnitten begleiten und durch im Vergleich zur Breite der Taschen schmale Rippen voneinander getrennt sind, von welchen Taschen eine zur Einzugsöffnung hin offen ist, wogegen eine andere Tasche durch eine weitere, unmittelbar neben der Einzugsöffnung angeordnete Rippe der Mantelwand gegen die Einzugsöffnung abgeschlossen ist.

Vorrichtungen zum Aufbereiten thermoplastischen Kunststoffgutes mit solchen Taschen an der Innenwand eines Schneckengehäuses sind bekannt (GB-A 1,368.488, DE-A 1,729.198, DE-A 3,401.817). Diese bekannten Vorrichtungen bereiten jedoch erhebliche Probleme bei der Befüllung der Schnecke, insbesondere dann, wenn das zu verarbeitende thermoplastische Kunststoffgut in Folienform vorliegt, auch wenn diese Folien zerkleinert sind. Die Folienstücke bilden nämlich eine verhältnismäßig lose Masse, die nicht genügend sicher von der Schnecke mitgenommen wird oder sogar im Bereiche der Einzugsöffnung des Schneckengehäuses eine Brücke bildet. Als Folge davon kommt es zu einer unregelmäßigen Förderleistung der Schnecke, im Grenzfall sogar zum Ausfall der Förderung, was sich insbesondere bei solchen Schnecken nachteilig auswirkt, welche gegen einen Extruderkopf zu fördern. Außerdem besteht aus wirtschaftlichen Gründen stets die Forderung, den Förderwirkungsgrad der Schnecke bei gegebenem Schneckenaußendurchmesser möglichst groß zu machen. Wird hiebei versucht, dem dadurch Rechnung zu tragen, daß der Kerndurchmesser der Schnecke verringert wird, so zeigt sich, daß dem Grenzen gesetzt sind, da ja auf die Schnecke ein erhebliches Drehmoment aufgebracht werden muß, um das von der Schnecke aufgenommene Kunststoffgut zu fördern und so zu plastifizieren, daß es extrudiert werden kann.

Die Probleme werden noch dadurch verschärft, daß das zu verarbeitende Kunststoffgut in der Regel nicht homogen ist, vor allem nicht über längere Zeiträume hinweg. Kunststoffgut der eingangs geschilderten Art fällt häufig als Abfallware an, die einem Recyclingprozeß unterworfen werden soll. Hiebei zeigt sich, daß sowohl die Art des angelieferten Kunststoffmateriales (chemische Zusammensetzung des Kunststoffes) als auch die Form des zu verarbeitenden Materiales stark unterschiedlich ist. Dementsprechend ist auch der Förderwirkungsgrad der Schnecke, d.h. das Maß, mit welchem die Schnecke das Kunststoffmaterial erfassen und von der Einzugsöffnung weg transportieren kann, sehr unterschiedlich, je nachdem, welche Materialart zur Bearbeitung ansteht.

Schließlich muß beachtet werden, daß aus Gründen einer möglichst hohen Auslastung vorhandener Anlagen eine Vorrichtung der eingangs geschilderten Art auch einsetzbar sein soll für solche Kunststoffgutarten, die schon stark vorverdichtet bzw. relativ kompakt sind, wie Agglomerate oder Granulate. Für solche Kunststoffgutarten besteht die Gefahr, daß der Förderwirkungsgrad der Schnecke zu groß wird, so daß die Schnecke gleichsam überfüttert wird. Weiters kann der zulässige Förderwirkungsgrad der Schnecke auch dann überschritten werden, wenn Kunststoffmaterial verarbeitet werden soll, das sehr viel Energie benötigt, um in den plastifizierten Zustand übergeführt zu werden. Ein zu hoher Förderwirkungsgrad der Schnecke oder eine Überfütterung derselben macht sich dadurch bemerkbar, daß der Antriebsmotor der Schnecke im Grenzstrombereich arbeitet, wodurch mechanische Bauteile überbeansprucht werden. In krassen Fällen kann dies bis zum Bruch der Maschine führen.

Die Erfindung setzt sich zur Aufgabe, die geschilderten Nachteile und Schwierigkeiten zu überwinden und die Befüllung der Schnecke verläßlicher zu gestalten, unabhängig davon, welche Art von thermoplastischem Kunststoffgut zur Verarbeitung ansteht. Zugleich soll der Ausstoß der Vorrichtung bei gegebenen Schneckenabmessungen möglichst groß gehalten werden können, ohne das Drehmoment der Schnecke in unzulässige Bereiche zu führen. Die Erfindung löst diese Aufgabe dadurch, daß - ausgehend von einer Vorrichtung der eingangs geschilderten Art - die Zubringeeinrichtung das Kunststoffgut mit einer normal zur Längsachse der Schnecke gerichteten Bewegungskomponente in die Einzugsöffnung zur Schnecke stopft, und daß zumindest die neben der Einzugsöffnung angeordnete Rippe verstellbar ist. Beide geschilderten Maßnahmen dienen demselben Zweck, nämlich, die Aufnahme des Kunststoffgutes durch die Schnecke möglichst optimal zu gestalten. Die Stopfwirkung der Zubringeeinrichtung gewährleistet, daß stets genügend Material zur Verfügung steht, um die Schnecke ausreichend zu befüllen. Dies ist insbesondere dann von Wichtigkeit, wenn das zu verarbeitende Kunststoffmaterial die eingangs erwähnte lose Beschaffenheit hat, z.B. in Form von Folienschnitzeln vorliegt, und daher zur Brückenbildung vor der Einzugsöffnung neigt. Solche Brücken werden durch die Stopfwirkung der Zubringeeinrichtung vermieden. Zugleich wird aber durch das ausreichende Aufnahmevolumen der Taschen gesichert, daß die von der Zubringeeinrichtung in die zur Einzugsöffnung offene Tasche gestopfte Kunststoffmasse auch verläßlich von der Schnecke aufgenommen und weitertransportiert wird. Die Begrenzung dieser Tasche, welche von der auf sie - gesehen in Umfangsrichtung der Schnecke - folgenden Rippe gebildet wird, bewirkt nämlich, daß das in dieser Tasche befindliche Kunststoffgut nicht mit der Schnecke umlaufen kann. Die in dieser Tasche befindliche Kunststoffgutmenge wird beim Auftreffen auf die Begrenzungsrippe dieser Tasche zwischen die Gänge der Schnecke gedruckt und somit verläßlich durch diese Gänge weitertransportiert. Ähnlich verhält es sich mit der zumindest einen weiteren Tasche, in welche bei der Umlaufbewegung der Schnecke zwar das Kunststoffgut zunächst ausweichen kann, durch nachgeliefertes Kunststoffgut jedoch immer weiter nach vorn (gesehen in Förderrichtung der Schnecke) gedruckt wird, um spätestens am Ende der Tasche wieder zwischen die Gänge der Schnecke zu gelangen. Die Taschen bieten somit im Bereich der Einzugsöffnung einen zusätzlichen Befüllraum für das von der Zubringeeinrichtung unter Druck angelieferte und somit bis zu gewissem Grad vorverdichtete Kunststoffmaterial. Dies hat zur Folge, daß der Kerndurchmesser der Schnecke größer bemessen werden kann als dies ansonsten möglich wäre. Ein größerer Kerndurchmesser der Schnecke bedeutet aber, daß auf die Schnecke ein größeres Drehmoment aufgebracht werden kann, als dies bisher möglich war, so daß der maximale Ausstoß pro Zeiteinheit bei gleichem Schneckendurchmesser gegenüber bekannten Ausführungsformen vergrößert werden kann.

Die Verstellbarkeit zumindest jener Rippe, welche die ihr benachbarte Tasche gegen die Einzugsöffnung abschließt, bietet die Möglichkeit, den Förderwirkungsgrad der Schnecke den jeweils vorliegenden Gegebenheiten anpassen zu können, ohne die Schnecke selbst ändern zu müssen, also ohne einen zeitraubenden Schneckenwechsel in Kauf nehmen zu müssen und ohne das Drehmoment der Schnecke unzulässig hoch machen zu müssen. Die Veränderung des von der betreffenden Rippe begrenzten zusätzlichen Befüllungsraumes hat nämlich zur Konsequenz, daß das Mitnahmevermögen der Schnecke, also deren Förderwirkungsgrad, geändert wird, da sich die Größe des jeweils von der Rippe begrenzten Befüllungsraumes ändert. Jede verstellbare Rippe ist in ihrer Wirkung abhängig vom Grad der jeweiligen Verstellung, wodurch in überraschender Weise die Möglichkeit gegeben ist, den Förderwirkungsgrad einer Schnecke in einfacher Weise erheblich zu beeinflussen. Dadurch läßt sich dieser Förderwirkungsgrad so regulieren, daß der Durchsatz der Vorrichtung, welche zumeist das plastifizierte Kunststoffmaterial zu einem Extruderkopf fördert, an das vorhandene maximale Schneckendrehmoment angepaßt werden kann, in Abhängigkeit vom jeweils vorliegenden, zu verarbeitenden Kunststoffmaterial. Es ergibt sich nämlich hierbei der zusätzliche Effekt, daß - je nach dem Verstellungsgrad - ein geringerer oder größerer Anteil des in jener Tasche, welche von dieser Rippe begrenzt wird, befindlichen Kunststoffgutes wieder in die Einzugsöffnung zurückbefördert wird, also von der Schnecke letztlich nicht in Förderrichtung der Schnecke mitgenommen wird. Auf diese Weise läßt sich in einfacher und wirksamer Art der Förderwirkungsgrad der Schnecke ändern und Überlastungen der Schnecke vermeiden, bei konstantem Aufnahmevolumen der Schnecke. Mit einer so ausgebildeten Vorrichtung kann daher die Förderwirksamkeit der Einzugszone so eingestellt werden, daß der Durchsatz der Vorrichtung an das vorhandene maximale Schneckendrehmoment angepaßt wird. Zweckmäßig geschieht dies so, daß man vor dem Anfahren der Vorrichtung die verstellbaren Rippen nach außen (bezogen auf die Schnecke) in das Schneckengehäuse zurückzieht und während des Betriebes die verstellbaren Rippen so weit gegen die Schnecke zu verstellt, als dies für die Maschine bzw. ihren Antrieb verkraftbar ist. Dadurch wird es möglich, sowohl lose vorliegende Kunststoffteilchen (im allgemeinen in Flocken- oder Schnitzelform) als auch schon stark vorverdichtete Kunststoffteilchen (im Extremfall Granulate) mit derselben Extruderschnecke wirksam und jeweils mit maximalem Förderwirkungsgrad zu verarbeiten. Wie erwähnt, ergibt sich beim Hineinfahren der die Taschen begrenzenden Rippen eine Erhöhung des Förderwirkungsgrades der Schnecke, da die Rippen verhindern, daß sich das Kunststoffgut mit der Schnecke mitdreht und die letzte Rippe (das ist die der Einzugsöffnung benachbarte Rippe) umso mehr verhindert, daß das Kunststoffgut aus dieser Tasche wieder in die Einzugsöffnung zurückgelangt, je mehr diese Rippe gegen die Schnecke vorgeschoben wird. Die Zurückziehung jeder verstellbaren Rippe in das Schneckengehäuse bedeutet umgekehrt eine Verringerung des Förderwirkungsgrades der Schnecke, da Anteile des Kunststoffgutes nicht mehr so wirksam von der Schnecke erfaßt und weitertransportiert werden bzw. Anteile des Kunststoffgutes wieder in die Einzugsöffnung zurückgefördert werden.

Am günstigsten ist es, wenn gemäß einer Weiterbildung der Erfindung die in radialer Richtung der Schnecke gemessene Tiefe zumindest der zur Einzugsöffnung hin offenen Tasche, gesehen in Umlaufrichtung der Schnecke, konstant ist oder zunimmt. Auf diese Weise kann ein maximales Aufnahmevolumen der Schnecke ausgenützt werden, unabhängig von der Art und Beschaffenheit des zur Verarbeitung anstehenden Kunststoffgutes und ohne eine Überlastung der Schnecke bzw. ihres Antriebes befürchten zu müssen.

In radialer Richtung der Schnecke verstellbare Rippen sind bekannt (DE-A-3 233 841, DE-A 2 112 306). Keine dieser Rippen ist jedoch im erfindungsgemäßen Sinn angeordnet, sodaß sich die Verstellung dieser Rippen nicht im erfindungsgemäßen Sinne auswirken kann, zumal bei den bekannten Vorrichtungen keine Stopfwirkung auf das in die Einzugsöffnung eingebrachte Gut vorliegt. Auch die beiden eingangs beschriebenen bekannten Vorrichtungen können in der erfindungsgemäßen Weise nicht wirksam werden, da einerseits keine Stopfwirkung der Zubringeeinrichtung vorliegt und anderseits die Rippen nicht verstellbar sind. Zudem ist bei manchen der bekannten Vorrichtungen das Aufnahmevolumen der Taschen nicht ausreichend groß, da die Taschen einen sichelförmigen Querschnitt aufweisen, dessen Tiefe in Umlaufrichtung der Schnecke abnimmt.

Gemäß einer bevorzugten Ausführungsform der Erfindung ist zumindest eine Rippe an der der Einzugsöffnung gegenüberliegenden Seite der Schnecke angeordnet und bildet zumindest in jenem axialen Bereich der Schnecke, welcher im Bereich der Einzugsöffnung liegt, eine lagernde Abstützung für die Schnecke, um den von der Zubringeeinrichtung ausgeübten Stopfdruck aufzunehmen. Dadurch wird die Schnecke auch im Bereich der Einzugsöffnung sicher gelagert. Dies ist nicht nur zur Aufnahme des Stopfdruckes der Zubringeeinrichtung vorteilhaft, sondern auch im Falle des Einzuges von starren Fremdkörpern in die zur Einzugsöffnung offene Tasche, da diese Fremdkörper, z.B. Metallteilchen, Steine usw. die Schnecke im Bereich der Einzugsöffnung erheblich belasten. Aus diesem Grund ist es zweckmäßig, zumindest eine weitere Rippe in jenem Bereich anzuordnen, welcher der zur Einzugsöffnung offenen Tasche gegenüberliegt.

Die Rippen zwischen den Taschen können im Rahmen der Erfindung parallel zur Achsrichtung der Schnecke verlaufen, was herstellungsgemäß am einfachsten ist. Es ist jedoch im Rahmen der Erfindung auch möglich, die Rippen zwischen den Taschen in Richtung der Umlaufbewegung der Schnecke gekrümmt auszubilden, vorzugsweise mit gleichmäßiger Krümmung, so daß also diese Rippen nach Art der Züge eines Dralles einer Feuerwaffe verlaufen. Eine besonders günstige Mitnahme des Kunststoffgutes durch die Schnecke ergibt sich im Rahmen der Erfindung dann, wenn die Umlaufrichtung der Schnecke an der Einzugsöffnung zur offenen Tasche hin gerichtet ist. Um einen möglichst großen Füllbereich der Taschen zu bieten, ist es gemäß einer Weiterbildung der Erfindung zweckmäßig, wenn sich die Taschen in axialer Richtung der Schnecke nach beiden Seiten über den axialen Bereich der Einzugsöffnung hinaus erstrecken. Es gelangt also Kunststoffgut auch - gesehen in Förderrichtung der Schnecke - vor die Einzugsöffnung des Schneckengehäuses, wird jedoch durch die Förderwirkung der Schnecke immer wieder in Richtung zum Extruderkopf od.dgl. transportiert.

Um die Rückleitung des Kunststoffgutes aus den Taschen zwischen die Gänge der Schnecke zu begünstigen, kann gemäß einer Ausführungsform der Erfindung die Tiefe zumindest einer Tasche in Förderrichtung der Schnecke kontinuierlich abnehmen, vorzugsweise bis auf Null. Dadurch wird das in den Taschen befindliche Kunststoffgut allmählich wieder von der Schnecke erfaßt. Es kann jedoch gemäß einer anderen Ausführungsform der Erfindung die Anordnung auch so getroffen sein, daß die Tiefe zumindest einer Tasche in Förderrichtung der Schnecke zunächst konstant bleibt und erst gegen Ende der axialen Länge der Tasche auf Null abnimmt.

Die gegen die Einzugsöffnung abgeschlossenen Taschen sind zweckmäßig gleich breit, nur die gegen die Einzugsöffnung seitlich offene Tasche ist in der Regel breiter. Die die Taschen gegeneinander abgrenzenden Rippen können verhältnismäßig schmal sein. Vorzugsweise sind im Rahmen der Erfindung zumindest zwei breite Taschen vorhanden, deren jede sich, gemessen von der Achse der Schnecke, über einen Öffnungswinkel von zumindest 35° erstreckt. Besonders günstige Ergebnisse werden erzielt, wenn, in Umfangsrichtung der Schnecke gemessen, das Verhältnis der Breiten der Taschen zu jener der Rippen 3 bis 6, vorzugsweise 4 bis 5 beträgt.

Die Erfindung ist mit besonderem Vorteil anwendbar auf solche Konstruktionen, bei welchen die Schnecke eine Extruderschnecke ist, deren Kerndurchmesser gegen den Extruderkopf zu zunimmt. Diese Zunahme des inneren Schneckendurchmessers hat eine Verdichtung des Materiales und damit eine Plastifizierung desselben zur Folge. Dies kann mit sehr hohem Ausstoß erfolgen, da durch die Taschen - wie bereits erwähnt - eine Vergrößerung des Befüllungsraumes an der Einzugsöffnung erzielt wird, ohne daß der Kerndurchmesser der Schnecke unzulässig verringert werden muß. Es kann jedoch die Schnecke auch eine bloße Transportschnecke sein. Die Richtung der Schnecke, gesehen von der Einzugsöffnung, ist belanglos. In den meisten Fällen wird die Schnecke horizontal liegen, es ist jedoch auch eine davon abweichende, etwa vertikale Anordnung, denkbar. Weiters ist es möglich, diese Richtung dadurch variabel zu gestalten, daß das Gehäuse der Schnecke bezüglich der Zubringeeinrichtung verschwenkbar ist.

Besonders günstige Ergebnisse werden für eine Vorrichtung erzielt, bei welcher die Zubringeeinrichtung einen Behälter aufweist, in dessen Bodenbereich zumindest ein um eine vertikale Achse drehbares, mit Arbeitskanten versehenes Werkzeug angeordnet ist, welches das in den Behälter eingebrachte Kunststoffgut zerkleinert und bzw. oder mischt und durch eine Öffnung aus dem Behälter herausfördert, welche Öffnung mit der Einzugsöffnung des Schneckengehäuses in Verbindung steht, wobei vorzugsweise die Öffnung der Behältermantelwand zumindest annähernd auf der Höhe des Werkzeuges angeordnet ist. Hiebei werden die günstigsten Ergebnisse erzielt, wenn die Zulaufseite der zur Einzugsöffnung hin offenen Tasche zumindest annähernd auf der Höhe der Werkzeuge bzw. einer die Werkzeuge tragenden Läuferscheibe liegt. Dadurch wird die auf das Kunststoffgut ausgeübte Fliehkraftkomponente bestmöglichst im Sinne einer Stopfwirkung zur Befüllung der Tasche ausgenützt. Diese Fliehkraftkomponente kann in an sich bekannter Weise dadurch unterstützt werden, daß die Werkzeuge mit - in Umfangsrichtung gesehen - außen zurückversetzten Arbeitskanten ausgebildet sind, wodurch die Werkzeuge das Kunststoffgut zusätzlich zur Fliehkraftwirkung spachtelartig in die Einzugsöffnung und somit auch in die Tasche drücken. Eine weitere Verbesserung der Befüllung der Schnecke läßt sich im Rahmen der Erfindung dadurch erzielen, daß die offene Tasche einen Boden hat, der in Richtung zu den Werkzeugen bzw. zu einer die Werkzeuge tragenden Läuferscheibe geneigt ist. Dadurch ergibt sich eine trichterartige Ausbildung der Einzugsöffnung, welche die Aufnahme des Kunststoffgutes aus dem Behälter begünstigt.

Eine besonders zweckmäßige Ausführungsform der Erfindung besteht darin, daß die die zur Einzugsöffnung hin offene Tasche begrenzende Rippe auf der der Einzugsöffnung gegenüberliegenden Seite der Schnecke liegt. Im Falle eines Behälters der oben beschriebenen Art als Zubringeeinrichtung liegt dann diese Rippe zumindest annähernd auf der Höhe der Achse der Schnecke. Die zur Einzugsöffnung hin offene Tasche ist daher verhältnismäßig breit und erstreckt sich - gemessen von der Achse der Schnecke - über einen Öffnungswinkel von etwa 90°.

In der Regel ist es zweckmäßig, die Umlaufrichtung der Werkzeuge an der Einzugsöffnung in Förderrichtung der Schnecke zu wählen, obwohl auch die umgekehrte Anordnung sinnvoll ist.

Die räumlich günstigste Anordnung ist eine annähernd tangentiale Anordnung der Schnecke in Bezug auf die Mantelwand des Behälters, jedoch könnte die Schnecke auch schräg oder sogar in Achsrichtung des Behälters angeordnet sein. Desgleichen ist natürlich auch bei einer Zubringeeinrichtung der oben beschriebenen Art der schwenkbare Anschluß des Schneckengehäuses an den Behälter möglich.

Ein solcher Behälter als Zubringeeinrichtung ist jedoch nicht die einzige Möglichkeit. Vielmehr bestehen im Rahmen der Erfindung zahlreiche andere Möglichkeiten der Ausbildung der Zubringeeinrichtung. So ist es z.B. möglich, die Zubringeeinrichtung von einem an die Einzugsöffnung des Schneckengehäuses angeschlossenen Trichter zu bilden, in welchem eine Zubringeschnecke als Stopfschnecke angeordnet ist. Auch bezüglich einer solchen Zubringeeinrichtung bestehen die oben erwähnten Möglichkeiten für die Richtung des Schneckengehäuses.

Um eine möglichst große Einstellmöglichkeit zu haben, ist es im Rahmen der Erfindung zweckmäßig, alle Rippen unabhängig voneinander verstellbar auszubilden. Es wäre jedoch auch denkbar, daß nur die äußerste Rippe, das ist jene Rippe, welche unmittelbar neben der Einzugsöffnung liegt und die benachbarte Tasche in der vorgeschobenen Rippenstellung gegen die Einzugsöffnung abschließt, verstellbar ist und die restlichen Rippen starr ausgebildet werden.

Zur Verstellung der Rippe ist es zweckmäßig, wenn erfindungsgemäß jede verstellbare Rippe in einem Längsschlitz des Gehäuses geführt und mit Verstelltrieben gekuppelt ist. In der Regel wird dieser Längsschlitz in Axialrichtung der Schnecke im Schneckengehäuse verlaufen, jedoch sind auch, in der Regel geringe, schraubenlinienartige Krümmungen möglich. Eine günstige Ausführungsform besteht auch darin, zumindest eine der Rippen schräg zur Längsachse der Schnecke verlaufend auszubilden und an ihrer der Schnecke zugewendeten Fläche dem Schneckenumfang folgend zu formen. Für längere (gesehen in Axialrichtung der Schnecke) Rippen, welche in ihrer Gesamtheit schraubenlinienartig verlaufen, müßte die betreffende Rippe über ihre Länge unterteilt werden, wobei die einzelnen Teilstücke unabhängig voneinander verstellbar sein können. Der Längsschlitz des Gehäuses ergibt in jedem Fall eine sichere Führung für die Rippe. Die Verstelltriebe können im Rahmen der Erfindung von Zug- und Druckschrauben gebildet sein, die sich am Gehäuse der Schnecke abstützen. Es ist jedoch auch die Verwendung hydraulischer Verstelltriebe möglich, wobei es sogar denkbar wäre, die hydraulische Verstellung abhängig zu machen von der Erreichung des maximal zulässigen Schneckendrehmomentes. Geeignete Regelungen hiefür stehen zur Verfügung. Für eine Verstellung mittels Schrauben empfiehlt es sich im Falle einer im wesentlichen radialen Verstellung der Rippe in Bezug auf die Schnecke, pro Rippe zumindest zwei Zugschrauben und zumindest zwei Druckschrauben vorzusehen, wobei jeweils ein Paar dieser Schrauben im Bereich der Enden der Rippe an dieser angreifen. Die Anordnung der Schrauben an den Rippenenden vermeidet ein Kippmoment auf die Rippen und ermöglicht eine besonders feine Einstellung. Durch die Zugschrauben wird die betreffende Rippe in das Schneckengehäuse zurückgezogen, durch die Druckschrauben in Richtung zur Schnecke vorgeschoben.

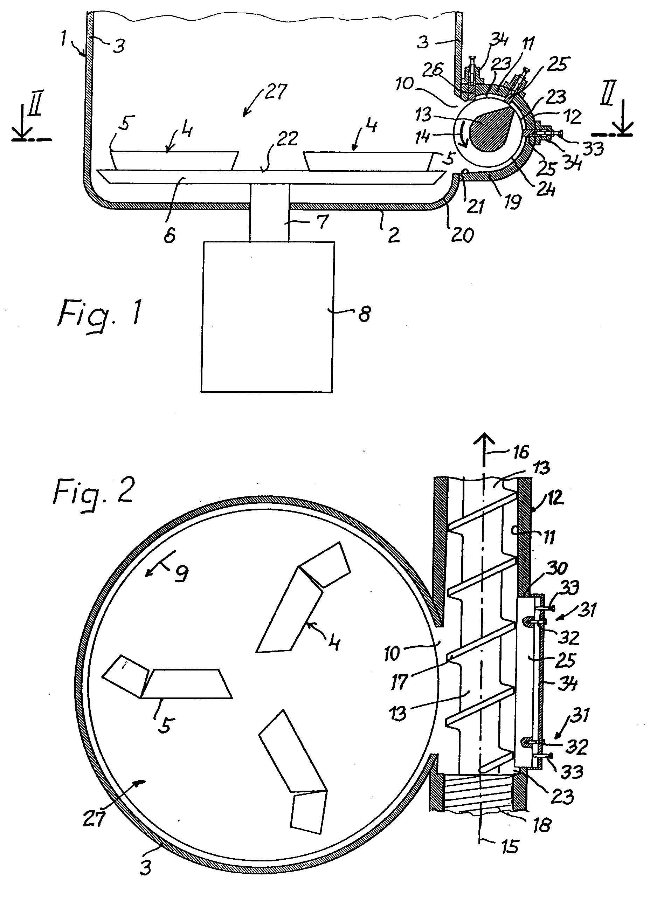

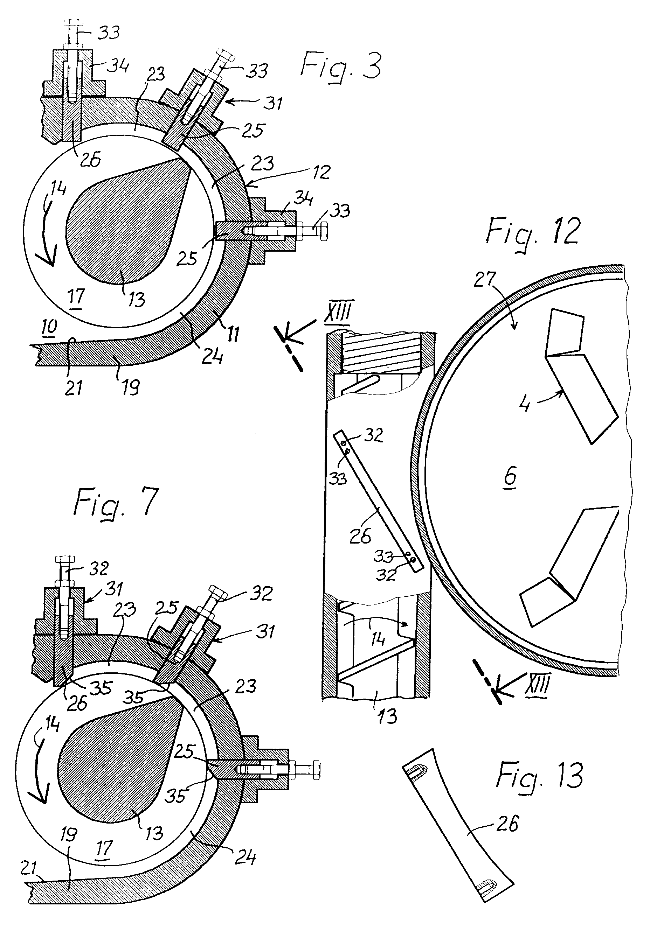

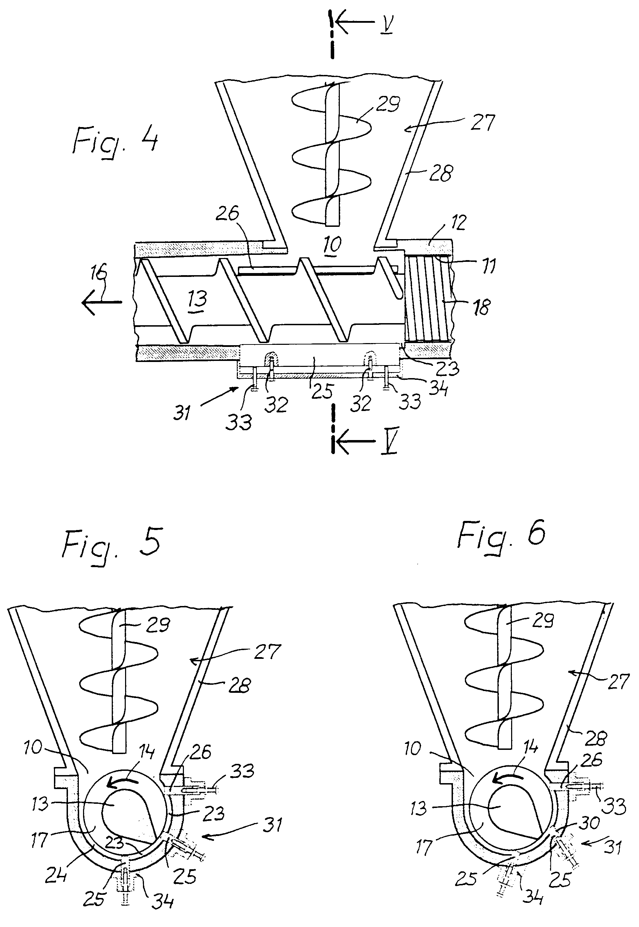

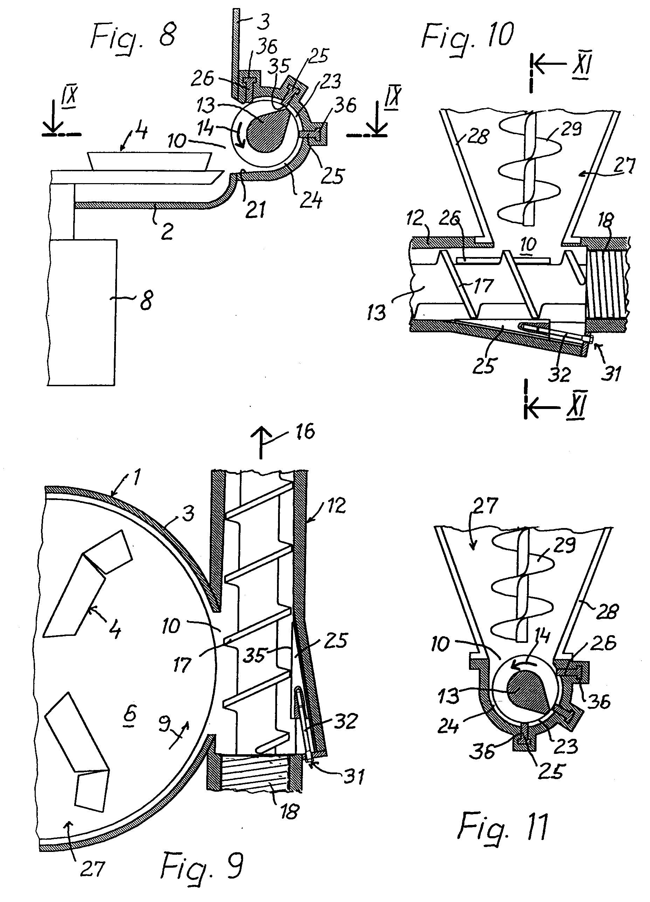

In der Zeichnung sind Ausführungsbeispiele der Erfindung schematisch dargestellt. Fig.1 zeigt einen Vertikalschnitt durch ein erstes Ausführungsbeispiel der Vorrichtung. Fig.2 ist ein Horizontalschnitt nach der Linie II - II der Fig.1. Fig.3 zeigt die Anordnung der Schnecke und der sie umgebenden Taschen bzw. Rippen in größerem Maßstab. Fig. 4 zeigt einen Vertikalschnitt durch ein zweites Ausführungsbeispiel und Fig. 5 ist ein Schnitt nach der Linie V - V der Fig. 4. Fig. 6. zeigt eine Ausführungsvariante zu Fig. 5. Fig. 7 zeigt eine Ausführungsvariante zu Fig. 3. Fig. 8 zeigt ein weiteres Ausführungsbeispiel im Vertikalschnitt und Fig. 9 ist ein Schnitt nach der Linie IX - IX der Fig. 8. Fig. 10 zeigt noch ein Ausführungsbeispiel im Vertikalschnitt und Fig. 11 ist ein Schnitt nach der Linie XI - XI der Fig. 10. Fig. 12 zeigt noch ein Ausführungsbeispiel in Draufsicht, teilweise im Schnitt und Fig. 13 zeigt einen Schnitt nach der Linie XIII - XIII der Fig. 12 durch eine verstellbare Rippe.

Die Vorrichtung nach den Fig. 1 - 3 hat einen Behälter 1 für die Bearbeitung des thermoplastischen Kunststoffgutes, welches in der Regel aus thermoplastischen Kunststoffabfällen aller Art, gebraucht oder nicht gebraucht, besteht, welche sowohl in Folienform als auch in kompakterer Form anfallen können. Der Behälter 1 hat einen Boden 2 und Mantelwände 3. Das zu behandelnde Kunststoffgut wird in den Behälter 1 von oben durch eine nicht dargestellte Beschickungseinrichtung eingebracht, gegebenenfalls nach einer Vorbehandlung, z.B. einer Reinigung oder einer Befreiung von groben Fremdkörpern, wie Steinchen oder Metallteilen. Die Bearbeitung des Kunststoffgutes im Behälter 1 erfolgt durch zumindest ein umlaufendes Werkzeug 4, das mit auf das Kunststoffgut einwirkenden, zweckmäßig abgewinkelten, scharfen Arbeitskanten 5 versehen ist und das Kunststoffgut in der Regel zerkleinert und bzw. oder mischt. Ersteres erfolgt, wenn das Kunststoffgut in Form größerer Elemente (Folien, Flaschen usw.) anfällt, letzeres ist bei bereits zu Teilchen aufbearbeitetem Kunststoffgut der Fall (z.B. bei Granulat). Zumeist findet bei dieser Mischung bzw. Zerkleinerung auch eine Erwärmung des Kunststoffgutes statt, was die spätere Überführung des Kunststoffgutes in den plastifizierten Zustand erleichtert. Die Werkzeuge 4 sind auf einer Läuferscheibe 6 montiert, die im Bereich des Bodens 2 angeordnet ist und über eine den Boden 2 durchsetzende Welle 7 von einem Motor 8 zur Umlaufbewegung in Richtung des Pfeiles 9 (Fig.2) angetrieben wird.

In der seitlichen Mantelwand 3 hat der Behälter 1 eine Öffnung, die zugleich die Einzugsöffnung 10 in der Mantelwand 11 des Gehäuses 12 einer Schnecke 13 bildet. Die Schnecke wird durch eine nicht dargestellte Antriebseinrichtung in Richtung des Pfeiles 14 zur Drehbewegung um ihre Längsachse 15 angetrieben und fördert das Kunststoffgut in Richtung des Pfeiles 16. Ist die Schnecke 13 keine reine Förderschnecke, sondern eine Extruderschnecke, so tritt eine Plastifizierung des Kunststoffgutes auf, so daß dieses durch die Schnecke 13 zu einem an das Gehäuse 12 angeschlossenen, nicht dargestellten Extruderkopf zugeleitet werden kann. Die Gänge 17 der Schnecke 13 erstrecken sich, entgegen der Förderrichtung 16 gesehen, über die Einzugsöffnung 10 hinaus und gehen dort in ein als Dichtung wirkendes Gewinde 18 über, dessen Steigung jener der Schneckengänge gleichgerichtet ist. Die Schnecke 13 bzw. ihr Gehäuse 12 kann mit einer Heizung und bzw. oder mit einer Kühlung versehen sein.

Die etwa rechteckige Einzugsöffnung 10 ist verhältnismäßig groß bemessen, sie erstreckt sich in axialer Richtung der Schnecke 13 mindestens über etwa einen halben Gewindegang der Schnecke 13. Die in Achsrichtung des Behälters 3 gemessene Höhe der Einzugsöffnung 10 beträgt zumindest etwa drei Viertel des Durchmessers der Schneckengänge 17. Dies sichert, daß die Schnecke das Kunstoffmaterial in großen Mengen aus dem Behälter 1 aufnehmen kann. Das Gehäuse 12 der Schnecke 13 ist seitlich etwa tangential an die Mantelwand 3 des Behälters 1 angebaut, derart, daß - in Richtung der Achse 15 der Schnecke 13 gesehen - der Umfang der Schnecke 13 mit der Innenfläche der Mantelwand 3 des Behälters 1 etwa bündig liegt (Fig.1). Die Mantelwand 11 des Schneckengehäuses 12 geht am unteren Rand der Einzugsöffnung 10 über einen annähernd horizontal liegenden Abschnitt 19 in den Übergangsbereich 20 zwischen Mantelwand 3 und Boden 2 des Behälters 1 über. Der Boden 21 dieses horizontalen Abschnittes 19 liegt etwa auf gleicher Höhe wie die Deckfläche 22 der Läuferscheibe 6. Dies ergibt die Optimallage für die Läuferscheibe, Abweichungen davon wirken sich jedoch nicht allzu stark aus, solange sie nicht allzu groß sind. Vorzugsweise ist der Boden 21 - wie Fig.1 zeigt - gegen die Läuferscheibe 6 bzw. deren Werkzeuge 4 geringfügig geneigt, sodaß die Einzugsöffnung 10 eine trichterartige Gestalt erhält.

Der Behälter 1 mit den darin umlaufenden Werkzeugen 4 bildet eine Zubringeeinrichtung 27, welche das von ihr bearbeitete Kunststoffgut in die Einzugsöffnung 10 eindrückt. Diese Wirkung wird einerseits hervorgerufen durch die Fliehkraftwirkung des von den umlaufenden Werkzeugen 4 in Umlaufbewegung versetzten Kunststoffgutes, anderseits durch die spachtelartige Wirkung der Werkzeuge 4. Hiedurch ergibt sich auf das von den Werkzeugen 4 bearbeitete bzw. gemischte Kunststoffgut eine Stopfwirkung im Bereich der Einzugsöffnung 10, wobei die Richtung des Eindrückens bzw. der Stopfwirkung im wesentlichen normal zur Längsachse der Schnecke 13 steht. Dadurch wird einerseits einer Brückenbildung des Kunststoffmateriales im Bereich der Einzugsöffnung 10 entgegengewirkt, anderseits wird stets genügend Kunststoffmaterial im Bereich der Einzugsöffnung 10 zwischen die einzelnen Gänge der Schnecke 13 gedrückt und dadurch die Schnecke laufend ausreichend mit zu förderndem Kunststoffmaterial versorgt, auch wenn dieses in sehr loser Form vorliegt, z.B. in Form von Flocken, Folienschnitzeln usw. Um den Einzug des von den Werkzeugen 4, welche zweckmäßig als Messer ausgebildet sind, in die Einzugsöffnung 10 geförderten Kunststoffgutes noch weiter zu verbessern und um zumindest einen zusätzlichen Befüllungsraum im Bereich der Einzugsöffnung 10 zusätzlich zu den von den Schneckengängen 17 begrenzten Räumen zu bieten, sind an der Innenwand 11 des Schneckengehäuses 12 mehrere Taschen 23, 24 vorgesehen. Diese Taschen erstrecken sich in Längsrichtung der Schnecke 13 im Bereich und in der Nähe der Einzugsöffnung 10 über zumindest einen Schneckengang, im dargestellten Beispiel über etwa 2,5 Schneckengänge (Fig.2). Jede Tasche 23, 24 ist von einer breiten Nut in der Mantelwand 11 des Gehäuses 12 gebildet, deren in Umfangsrichtung der Schnecke 13 gemessene Breite über die Länge der Tasche vorzugsweise konstant ist. Hingegen verringert sich die in radialer Richtung der Schnecke 13 gemessene Tiefe der Taschen 23, 24 in Förderrichtung (Pfeil 16) der Schnecke 13 kontinuierlich, vorzugsweise gleichmäßig. Jedoch kann auch die Anordnung so getroffen sein, daß diese Tiefe jeder Tasche 23, 24 in Förderrichtung der Schnecke 13 zunächst konstant bleibt und sich erst gegen das der Austragsöffnung des Schneckengehäuses 12 benachbarte Ende der jeweiligen Tasche 23, 24 allmählich veringert. Die größte Tiefe haben die Taschen 23, 24 somit immer an jenem Ende der Taschen, welches dem Antriebsende der Schnecke 13 benachbart ist. Zweckmäßig schließt dieses Taschenende - wie Fig.2 zeigt - mit dem Dichtungsgewinde 18 bündig ab. Am anderen, dem Austragsende der Schnecke 13 benachbarten Ende laufen die Taschen 23, 24 sanft in die zylinderförmige Innenfläche der Mantelwand 11 über. In jedem Querschnittsbereich der Schnecke 13 bleibt die in radialer Richtung der Schnecke 13 gemessene Tiefe der Tasche über die Breite derselben konstant (Fig.1) oder vergrößert sich in Drehrichtung (Pfeil 14) der Schnecke 13. Im dargestellten Ausführungsbeispiel beträgt die größte Taschentiefe etwa 5 bis 10% des Durchmessers der Schnecke 13. Die einzelnen Taschen 23, 24 sind voneinander durch Rippen 25 getrennt und eine weitere Rippe 26 schließt die Reihe der Taschen 23 am oberen Ende der Einzugsöffnung 10 gegen das Behälterinnere ab. Am unteren Ende der Einzugsöffnung 10 ist die erste Tasche 24 (gezählt in Umlaufrichtung der Schnecke 13) hingegen zum Innenraum des Behälters 1 offen, sodaß dort das von den Werkzeugen 4 zerkleinerte bzw. gemischte Kunststoffgut bei der Drehung der Läuferscheibe 6 in die Tasche 24 eingedrückt wird. Auch hier wirkt sich die oben beschriebene Stopfwirkung aus, d.h. die Eindrückung des Kunststoffmateriales erfolgt sowohl durch die Fliehkraftwirkung des im Behälter 1 umlaufenden Kunststoffgutes als auch die durch die spachtelartige Wirkung der umlaufenden Werkzeuge 4. Das durch die Einzugsöffnung 10 in das Innere des Schneckengehäuses 12 hineingedrückte Kunststoffmaterial gelangt aber nicht nur in die Tasche 24 und zwischen die einzelnen Gänge 17 der Schnecke 13, sondern füllt von dort auch die beiden Taschen 23. Da sich die Rippen 25, 26 in Axialrichtung der Schnecke 13 erstrecken und auch die Taschen 23, 24 in dieser Richtung verlaufen, kann sich das in diesen Taschen 23, 24 befindliche Kunststoffgut nicht mit der Schnecke 13 mitdrehen. Durch das laufend nachgelieferte Kunststoffgut und durch die Drehung der Schnecke 13 wird das in den Taschen 23, 24 befindliche Kunststoffgut allmählich, ebenfalls in Richtung des Pfeiles 16, vorgeschoben, bis die Taschen 23, 24 an ihren Enden in die zylindrische Form der Mantelwand 11 des Schneckengehäuses 12 übergehen. Im Laufe dieses Transportes des Kunststoffgutes in den Taschen 23, 24 wird das Kunststoffgut allmählich zwischen die Gänge 17 der Schnecke 13 gedrückt. Sobald dies der Fall ist, erfolgt der Transport des Materiales durch die Schnecke 13 in üblicher Form, z.B. zu einem Extruderkopf oder zu einer weiteren, zu einem Extruderkopf führenden Schnecke.

Es kann jedoch auch die Anordung so getroffen sein, daß die Rippen 25, welche zwischen je zwei Taschen 23, 24 liegen, drallartig gewunden in Längsrichtung des Schneckengehäuses 12 verlaufen, und zwar mit einer Krümmung, welche der Umlaufbewegung der Schnecke 13 (Pfeil 14) folgt. Bis zu gewissem Grad kann dies auch für die am oberen Ende der Einzugsöffnung 10 liegende Rippe 26 der Fall sein. Die Neigung der Richtung der Rippen relativ zur Axialrichtung der Schnecke 13 ist jedoch in der Regel gering, sie überschreitet zumeist nicht 5°, Durch eine solche drallartige Ausbildung der die Taschen 23,24 begrenzenden Rippen 25, 26, wird die Mitnahme des Kunststoffmateriales begünstigt und ein Reinigungseffekt erzielt, da das Kunststoffmaterial allmählich entlang der Rippen entlang gleitet.

Zweckmäßig ist die Drehrichtung (Pfeil 9) der Läuferscheibe 6 so, daß der Umfang der Läuferscheibe 6 an der Einzugsöffnung 10 in Förderrichtung der Schnecke 13 (Pfeil 16) vorbeiläuft. Jedoch ist auch die entgegengesetzte Drehrichtung der Läuferscheibe 6 sinnvoll möglich, da dann das von der Läuferscheibe 6 bzw. den Werkzeugen 4 in die Einzugsöffnung 10 hineingedrückte Material auf die gegensinnig laufenden Schneckengänge 17 trifft und dadurch besonders wirksam in die Taschen 23, 24 geleitet wird.

Die Anordnung der Schnecke 13 bzw. ihres Gehäuses 12 muß nicht exakt tangential zum Behälter 1 sein. So ist eine Anordnung sinnvoll möglich, bei welcher das Schneckengehäuse 12, in der Draufsicht gesehen, den Grundriß der Läuferscheibe 6 sekantenartig schneidet, sodaß die Schnecke 13 näher an die umlaufenden Werkzeuge 4 herangerückt wird.

Die tangentiale bzw. sekantenartige Anordnung des Schneckengehäuses 12 in Bezug auf den Behälter 1 hat den Vorteil, daß der Antrieb für die Schnecke 13 und die Auslaßöffnung der Schnecke 13, z.B. ein Extruderkopf, an den beiden Stirnenden der Schnecke 13 angeordnet werden können, sodaß das Kunststoffgut ohne Umlenkungen von der Schnecke zum Extruderkopf od.dgl. gefördert wird. Die Drehrichtung der Schnecke 13 ist zweckmäßig so gewählt, daß die Schneckengänge 17 an der Einzugsöffung 10 in Richtung zum Boden 21 jener Tasche 24 verlaufen, welche zum Inneren des Behälters 1 hin offen ist.

Die erfindungsgemäße Anordnung ist auch anwendbar auf Behälter, in welchen mehr als ein umlaufender Werkzeugsatz angeordnet ist. Es kann z.B. der Behälter zwei nebeneinander angeordnete Drehkreuze mit vertikalen Achsen aufweisen, welche die Werkzeuge 4 tragen, wobei sich die Bewegungsbahnen der Werkzeuge 4 verzahnungsartig überschneiden, jedoch einander nicht behindern. Wesentlich ist lediglich, daß zumindest einer dieser Werkzeugsätze das bearbeitete Kunststoffgut mit einer im wesentlichen normal auf die Achse der Schnecke 13 stehenden Förderrichtung in die Einzugsöffnung 10 stopft.

Fig.3 zeigt, daß die beiden seitlich abgeschlossenen Taschen 23 gleich breit sind und sich jeweils über eine Umfangswinkel von etwa 60° erstrecken. Die zur Einzugsöffnung 10 hin offene Tasche 24 ist hingegen breiter. Falls gewünscht, kann jedoch von dieser Anordnung abgewichen werden, etwa durch unterschiedliche Breiten der Taschen 23, 24. In der Regel sind jedoch zumindest zwei breite Taschen 23, 24 vorhanden, deren jede sich über einen Öffnungswinkel von zumindest 35° erstreckt. Die Ausbildung breiter Taschen ist günstig, da dadurch mehr vorverdichtetes Kunststoffmaterial, insbesondere in Flockenform, aufgenommen werden kann. Die Rippen 25, 26 sind hingegen verhältnismäßig schmal, jedenfalls wesentlich schmäler als die Taschen. Es hat sich als zweckmäßig erwiesen, das Verhältnis der Taschenbreite, gemessen in Umfangsrichtung der Schnecke, zur Rippenbreite mit etwa 3 bis 6, vorzugsweise 4 bis 5 zu bemessen. Besonders günstige Werte wurden im Intervall von 4,4 bis 4,8 für dieses Verhältnis erzielt. Die Rippen müssen nicht gleich breit sein.

Weiters ist es möglich, die Taschenbreite in Förderrichtung der Schnecke 13 (Pfeil 16) abnehmend auszubilden, sodaß sich also der Taschenquerschnitt nicht nur durch die abnehmende Taschentiefe verringert. Stets begleiten die Taschen 23, 24, im Querschnitt gesehen den Schneckenquerschnitt mit Kreisringabschnitten. Für die Tasche 24 gilt dies in jenem Bereich der an den vom Boden 21 begrenzten keilförmigen Einzugsspalt anschließt. Die Breite der untersten, zur Einzugsöffnung 10 hin offenen Tasche 24 ist zweckmäßig größer als jene der anderen Taschen 23. Besonders günstig ist eine Ausführungsform, bei welcher zumindest eine Rippe 25 an jener Seite der Schnecke 13 liegt, welche der Einzugsöffnung 10 abgewendet ist. Im dargestellten Ausführungsbeispiel (Fig. 1,3) liegt diese, die Tasche 24 begrenzende Rippe 25 etwa auf der Höhe der Achse der Schnecke 13. Eine Alternative hiezu besteht darin, eine zweite Rippe 25 etwa spiegelbildlich zur untersten Rippe 25, in Bezug auf die Achse 15 der Schnecke 13 anzuordnen. Da die Rippen 25 am Umfang der Schneckengänge 17 anliegen, ergibt sich durch diese Rippe 25 bzw. das beschriebene Rippenpaar eine gute Abstützung der Schnecke 13 in Bezug auf den über das eingebrachte Kunststoffmaterial auf die Schnecke 13 ausgeübten Stopfdruck, welcher bei entsprechend ausgebildeten Werkzeugen 4 relativ hohe Werte annehmen kann. Eine weitere Druckausübung auf die Schnecke 13 ergibt sich im Falle des Einzuges eines kompakten Fremdkörpers, z.B. eines Holz- oder Metallstückes, etwa einer Schraube, oder eines nicht genügend zerkleinerten Kunststoffstückes. Wird ein solcher Fremdkörper in die Tasche 24 eingezogen, so ergibt sich eine Druckkomponente auf die Schnecke 13, welche von der Einzugsöffnung 10 weg gerichtet ist und durch die beschriebene Rippenanordnung aufgenommen wird. Die Schnecke 13 ist somit im Bereich der Einzugsöffnung 10 gelagert und sicher abgestützt.

Um sich an unterschiedliche Arten des zu verarbeitenden Kunststoffmateriales anpassen zu können, ist zumindest eine der Rippen 25, 26, insbesondere die Rippe 26, verstellbar ausgebildet. Hiezu ist die betreffende Rippe in einem Längsschlitz 30 (Fig.2) des Gehäuses 12 der Schnecke 13 geführt. Dieser Längsschlitz 30 verläuft in Achsrichtung der Schnecke 13. Die jeweilige Rippe 25 bzw. 26 ist hiebei von einer Leiste gebildet, die passend an den Seitenwänden des Längsschlitzes 30 geführt ist, der die Wand des Gehäuses 12 durchsetzt (Fig.2). Zur Verstellung der Rippe 25 bzw. 26 im Schlitz 30 sind Verstelltriebe 31 vorgesehen, mit denen die Rippe 25 bzw. 26 gekuppelt ist. Beim dargestellten Ausführungsbeispiel sind die Verstelltriebe 31 von Zugschrauben 32 und Druckschrauben 33 gebildet. Die Druckschrauben 33 liegen am Außenrand der Leiste der jeweiligen Rippe 25 bzw. 26 an und sind in Gewinde eines Abdeckteiles 34 einschraubbar, welcher die vom Längsschlitz 30 gebildete Öffnung dicht abschließt, jedoch für die Bewegung der jeweiligen Rippe 25 bzw. 26 genügend Platz läßt. Die Zugschrauben 32 sind in Gewinde der Leiste der jeweiligen Rippe 25, 26 einschraubbar und stützen sich mit ihren Köpfen am Abdeckteil 34 ab. In den Figuren 1 und 2 sind die Rippen 25, 26 in der innersten Stellung dargestellt, in welcher die Rippen die Taschen 23, 24 gegeneinander abschließen und an den Gängen der Schnecke 13 anliegen oder ihnen sehr nahe sind. Werden die Druckschrauben 33 zurückgeschraubt so kann mittels der Zugschrauben 32 die betreffende Rippe 25 bzw. 26 in den vom Abdeckteil 34 gebildeten Hohlraum zurückgezogen werden. Bei den Rippen 25 bewirkt dies, daß die von ihnen begrenzten Taschen 23, 24 miteinander mehr oder weniger in Verbindung gebracht werden, was gleich bedeutend ist mit einer Vergrößerung des Taschenvolumens. Dies bewirkt jedoch nicht eine Vergrößerung des Förderwirkungsgrades der Schnecke 13, sondern eine Verringerung desselben, da die betreffende Rippe 25 nun nicht mehr so wirksam das in der von ihr begrenzten Tasche 24 bzw. 23 befindliche Kunststoffgut in die Gänge der Schnecke hineindrückt. Bei der Rippe 26 bewirkt eine Zurückziehung, daß das in der von dieser Rippe 26 begrenzten Tasche 23 befindliche Kunststoffgut wieder teilweise in die Einzugsöffnung 10 zurückgebracht wird, wobei der Anteil dieses in die Öffnung 10 zurückgelieferten Kunststoffgutes abhängig ist vom Maß, um welches die Rippe 26 zurückgezogen wurde.

Auf diese Weise läßt sich der Effekt, der durch die Stopfwirkung der von den umlaufenden Werkzeugen 4 gebildeten Zubringeeinrichtung 27 und den Taschen 23, 24 erzielt wird, nach Wunsch einstellen. Diese Einstellung ist vorteilhaft, wenn das zu verarbeitende Kunststoffgut hinsichtlich Zusammensetzung, Dichte oder zur Plastifizierung nötiger Energie geändert wird oder darin starken Schwankungen unterworfen ist. Überlastungen der Vorrichtung können dadurch vermieden werden. Es wird hiebei zweckmäßig so vorgegangen, daß die Vorrichtung mit in das Gehäuse 12 bzw. die Abdeckteile 34 zurückgezogenen Rippen 25, 26 angefahren wird. Zeigt sich hiebei, daß das maximal zulässige Drehmoment für den Antrieb der Schnecke 13 nicht erreicht wird, so werden die die Taschen 23, 24 begrenzenden Rippen 25, 26 einzeln oder kombiniert soweit in Richtung zur Schnecke 13 zu verstellt, als dies für die Vorrichtung bzw. deren Antrieb verkraftbar ist. Durch das Hineinfahren der Rippen 25, 26 gegen die Schnecke 13 zu wird somit der Förderwirkungsgrad der Schnecke 13 erhöht, beim Herausfahren der Rippen 23, 24 hingegen verringert.

Die Verstellung der Rippen 25, 26 kann auch mittels hydraulischer Verstelltriebe erfolgen. Eine solche hydraulische Verstellung hat gegenüber der Schraubenverstellung den Vorteil, daß, falls gewünscht, mehrere oder alle Rippen 25, 26 gemeinsam verstellt werden können. In der Regel ist es jedoch günstiger, die Rippen 25, 26 unabhängig voneinander verstellbar auszubilden. Dies gilt insbesondere für die äußerste Rippe (Rippe 26), da diese den bereits erwähnten zusätzlichen Effekt der Rückförderung des aufgenommenen Kunststoffgutes zurück in die Einzugsöffnung 10 bietet. Wenn stets auf eine ausreichende Abstützung der Schnecke 13 auch im Bereich der Einzugsöffnung 10 gesorgt werden muß, dann ist es zweckmäßig, die in dem Bereich der Einzugsöffnung 10 die Abstützung bildenden Rippen 25 starr auszubilden und nur die der Einzugsöffnung 10 benachbarte Rippe 26 verstellbar zu gestalten. Dies gewährleistet, daß der von der Zubringeeinrichtung 27 ausgeübte Stopfdruck und auch der von einem starren Fremdkörper, welcher in die Tasche 24 eingezogen wird, ausgeübte Druck stets verläßlich aufgenommen werden kann. Wie bereits erwähnt, kann statt einer auf der Höhe der Achse 15 der Schnecke 13 angeordneten Rippe 25 ein Rippenpaar treten, von denen die eine Rippe etwas unterhalb der Achse 15 liegt, die andere etwas oberhalb. Gegebenenfalls können auch mehr als zwei Rippen 25 vorgesehen werden, jedoch sollte die Breite der Taschen 23, 24 nicht zu gering werden.

Bei der Ausführungsform nach den Fig. 4 und 5 ist die Zubringeeinrichtung 27 von einem an die Einzugsöffnung 10 oben angeschlossenen Trichter 28 gebildet, in welchem eine Zubringeschnecke 29 angeordnet ist. Diese Schnecke 29 fördert das in den Trichter 28 von oben eingebrachte Kuststoffgut gegen die Einzugsöffnung 10 und stopft es in sie hinein, wobei die Richtung dieser Stopfwirkung wieder im wesentlichen normal steht auf die Richtung der Längsachse der Schnecke 13. Bezüglich der Verstellung der Rippen 25, 26 entspricht die Ausführungsform nach den Figuren 4 und 5 jener nach den Figuren 1 bis 3. Bei der Ausführungsform nach den Figuren 4 und 5 sind die Rippen 23, 24 im Vergleich zur Einzugsöffnung 10 jedoch länger und überdecken den gesamten Bereich der Einzugsöffnung 10, sowie die Nachbarbereiche, wogegen bei der Ausführungsform nach den Figuren 1,2 und 3 die Rippen 25, 26 nur etwas länger sind als die größte Abmessung der im vorliegenden Fall rechteckigen Einzugsöffnung 10.

Die Ausführungsvariante nach Fig. 6 ähnelt jener nach den Fig. 4 und 5, jedoch sind die beiden Rippen 25 bzw. deren Führungsschlitze 30 im Gehäuse 12 nicht radial in Bezug auf die Achse der Schnecke 13 angeordnet, sondern schräg, im dargestellten Ausführungsbeispiel etwa tangential zum Umfang des Kernes der Schnecke 13, wobei die Neigung nach der Ablaufseite der Schnecke 13 gerichtet ist. Dies hat den Vorteil, daß durch die schräggestellten Wände der Rippen 25, auf welche das Kunststoffmaterial bei der Drehung der Schnecke 13 trifft, das Kunststoffgut besonders intensiv in die Gänge 17 der Schnecke 13 gedrückt wird. Zugleich ergibt sich hiebei ein Reinigungseffekt auf die Rippen 25, so daß sich an diesen Rippen 25 keine toten Ecken bilden, in denen Kunststoffgut längere Zeit verbleiben und dadurch thermisch geschädigt werden kann. Ein ähnlicher Effekt tritt schon bei den Ausführungsformen nach den Fig. 1 bis 5 für die Rippe 26 auf.

Bei der Ausführungsvariante nach Fig. 7, welche jener nach den Fig. 1 bis 3 ähnelt, wird ein ähnlicher Effekt, wie zuvor beschrieben, dadurch erreicht, daß die der Schnecke 13 zugewendeten Stirnflächen 35 der Rippen 25, 26 abgeschrägt sind, also keilförmig in Bezug auf den Außenumfang der Schneckengänge 17 verlaufen.

Die Ausführungsform nach den Fig. 8 und 9 unterscheidet sich von jener nach den Fig. 1 bis 3 dadurch, daß die die Taschen 23 bzw. 24 begrenzenden Rippen 25, 26 auf einer schiefen Ebene, z.B. in T-Nuten 36 oder schwalbenschwanzförmig ausgebildeten Führungen verschiebbar sind. Diese T-Nuten sind in Axialrichtung der Schnecke 13 angeordnet. Durch axiales Verschieben der betreffenden Rippe 25, 26 kann ihre Stirnfläche 35 in radialer Richtung der Schnecke 13 verstellt werden. Der Effekt ist der gleiche, wie dies im Zusammenhang mit den vorher beschriebenen Ausführungsbeispielen dargelegt wurde. Die Verstellung erfolgt durch Verstelltriebe 31, z.B. Zug- und Druckschrauben 32 bzw. 33, wie früher beschrieben.

Das Ausführungsbeispiel nach den Fig. 10 und 11 zeigt ähnliche keilförmige Rippen 25, 26, die in T-Nuten 36 geführt sind, jedoch bei einer Zubringeeinrichtung 27, deren Ausführungsform im wesentlichen jener nach den Fig. 4 bis 6 entspricht. Hier ändert sich das Einzugsverhalten für das Kunststoffgut an der Einbringeöffnung 10 bei einer Verstellung der Rippen 25 bzw. 26 auch dadurch, daß zusätzlich zur Ein- bzw. Auswärtsbewegung der Rippen 25 bzw. 26 auch eine Axialverschiebung derselben auftritt, so daß insbesondere für die Rippe 26 die Einzugsöffnung 10 mehr oder weniger freigegeben wird. In der dargestellten, völlig eingeschobenen Lage erstreckt sich die Rippe 26 z.B. nicht über den gesamten axialen Bereich der Einzugsöffnung 10, beim Zurückziehen der Rippe 26 hingegen schon. Der durch die axiale Verschiebung der Rippe 26 hervorgerufene Effekt wirkt daher dem durch die radiale Verstellung (in Bezug auf die Schnecke 13) hervorgerufenen Effekt entgegen bzw. schwächt diesen ab. Soll das Gegenteil erreicht werden, also sollen sich die beiden Effekte unterstützen, dann braucht lediglich die Richtung des Keiles der Rippe 26 umgedreht zu werden, so daß also die Spitze des Keiles der Rippe 26 dem Gegengewinde 18 zugewendet ist.

Bei der Ausführungsform nach den Fig. 12 und 13 entspricht die allgemeine Ausbildung der Zubringeeinrichtung 27 und der Schnecke 13 jener nach den Fig. 1 bis 3. Zumindest eine der Rippen 25, 26 ist jedoch nicht in Axialrichtung der Schnecke 13 angeordnet, sondern schräg dazu, im dargestellten Ausführungsbeispiel beträgt die Neigung etwa 30°. Die der Schnecke 13 zugewendete Stirnfläche 35 (Fig. 13) der betreffenden Rippe 25 bzw. 26 ist entsprechend dem Umfang der Schneckengänge 17 geformt, so daß diese Stirnfläche 35 überall an den Schneckengängen 17 (bei eingeschobener Rippe) anliegt und dadurch den Abstützeffekt ausüben bzw. auf die Rippen 27 reinigend einwirken kann. Die erwähnte Schrägstellung der betreffenden Rippe ist so gewählt, daß sich bei der Drehung der Schnecke 13 ein Hineindrücken des Kunststoffgutes in die Gänge der Schnecke ergibt.

Bei allen Ausführungsbeispielen fällt die Öffnung, durch welche das bearbeitete Kunststoffgut aus dem Behälter 1 mittels der. Werkzeuge 4 hinausgefördert wird, mit der Einzugsöffnung 10 des Schneckengehäuses 12 zusammen. Dies ist nicht unbedingt erforderlich, vielmehr können diese beiden Öffnungen durch einen nicht dargestellten Stutzen miteinander verbunden werden. In der Regel ist jedoch der direkte Anschluß günstiger. In einem solchen Stutzen oder auch in der Einzugsöffnung 10 kann ein nicht dargestellter Sperrschieber angeordnet sein, mit welchem der Behälter 1 gegenüber dem Schneckengehäuse 12 abgeschlossen werden kann, wenn dies gewünscht ist.

Die Schnecke 13 muß nicht horizontal angeordnet sein, sie kann vielmehr gegenüber der Horizontalrichtung auch geneigt oder sogar vertikal angeordnet werden. Die Schnecke 13 muß keine Extruderschnecke sein, vielmehr ist es denkbar, diese Schnecke als reine Förderschnecke auszubilden, welche das Material, gegebenenfalls unter Vorplastifizierung, zu einer eigentlichen Plastifizierschnecke eines Extruders führt.

## Patentansprüche

1. Vorrichtung zum Aufbereiten thermoplastischen Kunststoffgutes, insbesondere in Folienform, wie Folienreste, Säcke, Taschen usw., mit einer Einzugsöffnung (10) in der Mantelwand (11) des Gehäuses (12) einer Schnecke (13), die das in das Gehäuse (12) eingebrachte Kunststoffgut zumindest fördert, vorzugsweise auch plastifziert, in welche Einzugsöffnung (10) das Kunststoffgut durch eine Zubringeeinrichtung (27) eingebracht wird, wobei das Gehäuse (12) der Schnecke (13) an seiner Innenwand mit breiten Taschen (23, 24) versehen ist, die in Längsrichtung der Schnecke (13) oder gekrümmt zumindest über den Großteil des axialen Bereiches der Einzugsöffnung (10) verlaufen und die Schnecke (13), im Schnitt normal zur Schneckenachse (15) gesehen, entlang von Kreisringabschnitten begleiten, und durch im Vergleich zur Breite der Taschen (23,24) schmale Rippen (25) voneinander getrennt sind, von welchen Taschen (23,24) eine (24) zur Einzugsöffnung (10) hin offen ist, wogegen eine andere Tasche (23) durch eine weitere, unmittelbar neben der Einzugsöffnung (10) angeordnete Rippe (26) der Mantelwand (11) gegen die Einzugsöffnung (10) abgeschlossen ist, dadurch gekennzeichnet, daß die Zubringeeinrichtung (27) das Kunststoffgut mit einer normal zur Längsachse der Schnecke (13) gerichteten Bewegungskomponente in die Einzugsöffnung (10) zur Schnecke (13) stopft, und daß zumindest die neben der Einzugsöffnung (10) angeordnete Rippe (26) verstellbar ist.

2. Vorrichtung nach Anspruch 1, dadurch gekennzeichnet, daß die in radialer Richtung der Schnecke (13) gemessene Tiefe zumindest der zur Einzugsöffnung (10) hin offenen Tasche (24), gesehen in Umlaufrichtung der Schnecke (13), konstant ist oder zunimmt.

3. Vorrichtung nach Anspruch 1 oder 2, dadurch gekennzeichnet, daß zumindest eine Rippe (25) an der der Einzugsöffnung (10) gegenüberliegenden Seite der Schnecke (13) angeordnet ist und zumindest in jenem axialen Bereich der Schnecke (13), welcher im Bereich der Einzugsöffnung (10) liegt, eine lagernde Abstützung für die Schnecke (13) bildet, um den von der Zubringeeinrichtung (27) ausgeübten Stopfdruck aufzunehmen.

4. Vorrichtung nach Anspruch 1,2 oder 3, dadurch gekennzeichnet, daß zwischen den Taschen (23,24) Rippen (25) in Richtung der Umlaufbewegung der Schnecke (13) gekrümmt verlaufen, vorzugsweise gleichmäßig.

5. Vorrichtung nach einem der Ansprüche 1 bis 4, dadurch gekennzeichnet, daß die Umlaufrichtung der Schnecke (13) an der Einzugsöffnung (10) zur offenen Tasche (24) hin gerichtet ist.

6. Vorrichtung nach einem der Ansprüche 1 bis 5, dadurch gekennzeichnet, daß sich die Taschen (23,24) in axialer Richtung der Schnecke (13) nach beiden Seiten über den Bereich der Einzugsöffnung (10) hinaus erstrecken.

7. Vorrichtung nach einem der Ansprüche 1 bis 6, dadurch gekennzeichnet, daß die Tiefe zumindest einer Tasche (23,24) in Förderrichtung der Schnecke (13) kontinuierlich abnimmt, vorzugsweise bis auf Null, oder daß die Tiefe zumindest einer Tasche (23,24) in Förderrichtung der Schnecke (13) zunächst konstant bleibt und erst gegen Ende der axialen Länge der Tasche (23,24) auf Null abnimmt.

8. Vorrichtung nach einem der Ansprüche 1 bis 7, dadurch gekennzeichnet, daß die gegen die Einzugsöffnung (10) abgeschlossenen Taschen (23) gleich breit sind.

9. Vorrichtung nach einem der Ansprüche 1 bis 8, dadurch gekennzeichnet, daß zumindest zwei breite Taschen (23,24) vorhanden sind, deren jede sich, gemessen von der Achse der Schnecke (13), über einen Öffnungswinkel von zumindest 35° erstreckt.

10. Vorrichtung nach einem der Ansprüche 1 bis 9, dadurch gekennzeichnet, daß, in Umfangsrichtung der Schnecke (13) gemessen, das Verhältnis der Breiten der Taschen (23,24) zu jener der Rippen (26) 3 bis 6, vorzugsweise 4 bis 5 beträgt.

11. Vorrichtung nach einem der Ansprüche 1 bis 10, dadurch gekennzeichnet, daß jene Rippe (25), welche die zur Einzugsöffnung (10) hin offene Tasche (24) begrenzt, auf der der Einzugsöffnung gegenüberliegenden Seite der Schnecke (13) liegt.

12. Vorrichtung nach einem der Ansprüche 1 bis 11, dadurch gekennzeichnet, daß die Schnecke (13) eine Extruderschnecke ist, deren Kerndurchmesser gegen den Extruderkopf zunimmt.

13. Vorrichtung nach einem der Ansprüche 1 bis 12, dadurch gekennzeichnet, daß die Zubringeeinrichtung (27) einen Behälter (1) aufweist, in dessen Bodenbereich zumindest ein um eine vertikale Achse drehbares, mit Arbeitskanten (5) versehenes Werkzeug (4) angeordnet ist, welches das in den Behälter (1) eingebrachte Kunststoffgut zerkleinert und bzw. oder mischt und in eine Öffnung an der Mantelwand (3) des Behälters (1) drückt, welche Öffnung mit der Einzugsöffnung (10) in der Mantelwand (11) des Gehäuses (12) der Schnecke (13) in Verbindung steht.

14. Vorrichtung nach Anspruch 13, dadurch gekennzeichnet, daß die Zulaufseite der zur Einzugsöffnung (10) hin offenen Tasche (24) zumindest annähernd auf der Höhe der Werkzeuge (4) bzw. einer die Werkzeuge (4) tragenden Läuferscheibe (6) liegt.

15. Vorrichtung nach Anspruch 13 oder 14, dadurch gekennzeichnet, daß die offene Tasche (24) einen Boden (21) hat, der in Richtung zu den Werkzeugen (4) bzw. zu einer die Werkzeuge (4) tragenden Läuferscheibe (6) geneigt ist.

16. Vorrichtung nach einem der Ansprüche 13 bis 15, dadurch gekennzeichnet, daß die Umlaufrichtung der Werkzeuge (4) an der Einzugsöffnung (10) in Förderrichtung (Pfeil 16) der Schnecke (13) ist.

17. Vorrichtung nach einem der Ansprüche 13 bis 16, dadurch gekennzeichnet, daß die Schnecke (13) zumindest annähernd tangential zur Mantelwand (3) des Behälters (1) liegt.

18. Vorrichtung nach einem der Ansprüche 1 bis 12, dadurch gekennzeichnet, daß die Zubringeeinrichtung (27) von einem mit der Einzugsöffnung (10) in Verbindung stehenden Trichter (28) gebildet ist, in welchem eine zur Einzugsöffnung (10) gerichtete Stopfschnecke für das Kunststoffgut angeordnet ist.

19. Vorrichtung nach einem der Ansprüche 1 bis 18, dadurch gekennzeichnet, daß die die Tasche (23) gegen die Einzugsöffnung (10) abschließende Rippe (26) verstellbar ist.

20. Vorrichtung nach einem der Ansprüche 1 bis 19, dadurch gekennzeichnet, daß die verstellbare Rippe (25,26) auf die Schnecke (13) zu bzw. von ihr weg verstellbar ist.

21. Vorrichtung nach einem der Ansprüche 1 bis 20, dadurch gekennzeichnet, daß zumindest zwei Rippen (25,26) unabhängig voneinander verstellbar sind.

22. Vorrichtung nach einem der Ansprüche 1 bis 21, dadurch gekennzeichnet, daß jede verstellbare Rippe (25,26) in einem Längsschlitz (30) des Gehäuses (12) der Schnecke (13) geführt und mit Verstelltrieben (31) gekuppelt ist.

23. Vorrichtung nach Anspruch 22, dadurch gekennzeichnet, daß die Verstelltriebe (31) von Zugschrauben (32) und Druckschrauben (33) gebildet sind, die sich am Gehäuse (12) der Schnecke (13) abstützen.

24. Vorrichtung nach Anspruch 23, dadurch gekennzeichnet, daß pro Rippe (25,26) zumindest zwei Zugschrauben (32) und zumindest zwei Druckschrauben (33) vorgesehen sind, wobei jeweils ein Paar dieser Schrauben im Bereich der Enden der Rippe (25,26) an dieser angreifen.

25. Vorrichtung nach einem der Ansprüche 1 bis 23, dadurch gekennzeichnet, daß die verstellbare Rippe (25 bzw.26) Keilform hat und in Längsrichtung des Keiles verschiebbar im Gehäuse (12) der Schnecke (13) geführt ist.

26. Vorrichtung nach einem der Ansprüche 1 bis 25, dadurch gekennzeichnet, daß die der Schnecke (13) zugewendeten Flächen (35) zumindest einer Rippe (25 bzw.26) abgeschrägt sind.

27. Vorrichtung nach einem der Ansprüche 1 bis 24 und 26, dadurch gekennzeichnet, daß zumindest eine der Rippen (25,26) schräg zur Längsachse der Schnecke (13) verläuft und an ihrer der Schnecke (13) zugewendeten Fläche (35) dem Schneckenumfang folgend geformt ist.

28. Vorrichtung nach einem der Ansprüche 1 bis 27, dadurch gekennzeichnet, daß eine die Schnecke (13) im Bereich der Einzugsöffnung (10) abstützende Rippe (25) auf der Höhe der Achse (15) der Schnecke (13) angeordnet ist.

29. Vorrichtung nach einem der Ansprüche 1 bis 28, dadurch gekennzeichnet daß die in radialer Richtung der Schnecke gemessenen Tiefe zumindest einer Tasche (23,24), gesehen in Umlaufrichtung der Schnecke (13), zunimmt.

## Claims

1. A device for preparing thermoplastic plastics material, in particular in the form of a foil, such as foil remnants, bags pouches *etc*., with a feed opening (10) in the casing wall (11) of the housing (12) of a screw (13) which at least conveys, and preferably also plasticizes, the plastics material introduced into the housing (12), the plastics material being introduced into the said feed opening (10) by a supply device (27), wherein the housing (12) of the screw (13) is provided on its inner wall with wide pockets (23, 24) which extend in the longitudinal direction of the screw (13) or in a curve at least over the greater part of the axial region of the feed opening (10) and accompany the screw (13) - as viewed in section at a right angel to the axis (15) of the screw - along annular portions, and are separated from one another by ribs (25) which are narrower than the width of the pockets (23, 24), one (24) of which pockets (23, 24) is open towards the feed opening (10), whereas another pocket (23) is closed off from the feed opening (10) by a further rib (26) of the casing wall (11) situated immediately adjacent to the feed opening (10), **characterized in that** the supply device (27) packs the plastics material into the feed opening (10) to the screw (13) with a movement component directed at a right angle to the longitudinal axis of the screw (13), and at least the rib (26) situated adjacent to the feed opening (10) is displaceable.

2. A device according to Claim 1, **characterized in that** the depth - measured in the radial direction of the screw (13) - of at least the pocket (24) open towards the feed opening (10) is constant or increases, as viewed in the peripheral direction of the screw (13).

3. A device according to Claim 1 or 2, **characterized in that** at least one rib (25) is situated on the side of the screw (13) opposite the feed opening (10) and, at least in that axial region of the screw (13) which is situated in the region of the feed opening (10), forms a bearing support for the screw (13) in order to absorb the packing pressure exerted by the supply device (27).

4. A device according to Claim 1, 2 or 3, **characterized in that** ribs (25) extend in a curve, preferably uniformly, between the pockets (23, 24) in the direction of the peripheral movement of the screw (13).

5. A device according to one of Claims 1 to 4, **characterized in that** the peripheral direction of the screw (13) at the feed opening (10) is directed towards the open pocket (24).

6. A device according to one of Claims 1 to 5, **characterized in that** the pockets (23, 24) extend on both sides beyond the region of the feed opening (10) in the axial direction of the screw (13).

7. A device according to one of Claims 1 to 6, **characterized in that** the depth of at least one pocket (23, 24) decreases continuously, preferably to zero, in the conveying direction of the screw (13), or the depth of at least one pocket (23, 24) remains initially constant and decreases to zero only towards the end of the axial length of the pocket (23, 24), in the conveying direction of the screw (13).

8. A device according to one of Claims 1 to 7, **characterized in that** the pockets (23) closed towards the feed opening (10) are equal in width.

9. A device according to one of Claims 1 to 8, **characterized in that** at least two wide pockets (23, 24) are present, each of which, measured from the axis of the screw (13), extends over an opening angle of at least 35°.

10. A device according to one of Claims 1 to 9, **characterized in that**, as measured in the peripheral direction of the screw (13), the ratio of the width of the pockets (23, 24) to that of the ribs (26) is from 3 to 6, and preferably from 4 to 5.

11. A device according to one of Claims 1 to 10, **characterized in that** each rib (25), which bounds the pocket (24) open towards the feed opening (10) is situated on the side of the screw (13) opposite the feed opening.

12. A device according to one of Claims 1 to 11, **characterized in that** the screw (13) is an extrusion screw, the core diameter of which increases towards the extrusion head.

13. A device according to one of Claims 1 to 12, **characterized in that** the supply device (27) has a container (1), in the base region of which is arranged at least one tool (4) which is rotatable about a vertical axis and is provided with operating edges (5) and which comminutes and/or mixes the plastics material introduced into the container (1) and presses it into an opening in the casing wall (3) of the container (1), the said opening being connected to the feed opening (10) in the casing wall (11) of the housing (12) of the screw (13).

14. A device according to Claim 13, **characterized in that** the inlet side of the pocket (24) open towards the feed opening (10) is situated at least approximately at the level of the tools (4) or of a disc (6) supporting the tools (4).

15. A device according to Claim 13 or 14, **characterized in that** the open pocket (24) has a base (21) which is inclined in the direction towards the tools (4) or towards a disc (6) supporting the tools (4).

16. A device according to one of Claims 13 to 15, **characterized in that** the peripheral direction of the tools (4) at the feed opening (10) is in the conveying, direction (arrow 16) of the screw (13).

17. A device according to one of Claims 13 to 16, **characterized in that** the screw (13) is situated at least approximately tangentially to the casing wall (3) of the container (1).

18. A device according to one of Claims 1 to 12, **characterized in that** the supply device (27) is formed by a funnel (28) which is connected to the feed opening (10) and in which a packing screw - directed towards the feed opening (10) - for the plastics material is arranged.

19. A device according to one of Claims 1 to 18, **characterized in that** the rib (26) closing off the pocket (23) from the feed opening (10) is displaceable.

20. A device according to one of Claims 1 to 19, **characterized in that** the displaceable rib (25, 26) is displaceable towards the screw (13) and away from it respectively.

21. A device according to one of Claims 1 to 20, **characterized in that** at least two ribs (25, 26) are displaceable independently of one another.

22. A device according to one of Claims 1 to 21, **characterized in that** each displaceable rib (25, 26) is guided in a longitudinal slot (30) in the housing (12) of the screw (13) and is coupled to displacement drives (31).

23. A device according to Claim 22, **characterized in that** the displacement drives (31) are formed by traction screws (32) and pusher screws (33), which are supported on the housing (12) of the screw (13).

24. A device according to Claim 23, **characterized in that** at least two traction screws (32) and at least two pusher screws (33) are provided *per* rib (25, 26), wherein one respective pair of the said screws in the region of the ends of the rib (25, 26) engages thereon in each case.

25. A device according to one of Claims 1 to 23, **characterized in that** the displaceable rib (25 or 26 respectively) is wedge-shaped and is guided in the casing (12) of the screw (13) so as to be displaceable in the longitudinal direction of the wedge.

26. A device according to one of Claims 1 to 25, **characterized in that** the surfaces (35) of at least one rib (25 or 26 respectively) facing the screw (13) are sloped.

27. A device according to one of Claims 1 to 24 and 26, **characterized in that** at least one of the ribs (25, 26) extends obliquely to the longitudinal axis of the screw (13) and is shaped on its surface (35) facing the screw (13) in accordance with the periphery of the screw.

28. A device according to one of Claims 1 to 27, **characterized in that** a rib (25) supporting the screw (13) in the region of the feed opening (10) is arranged at the level of the axis (15) of the screw (13).

29. A device according to one of Claims 1 to 28, **characterized in that** the depth of at least one pocket (23, 24), measured in the radial direction of the screw, increases as viewed in the peripheral direction of the screw (13).

## Revendications

1. Dispositif pour le traitement de matières thermoplastiques, en particulier sous la forme de films, de déchets de films, de sacs, de sachets, etc., comportant une ouverture d'amenée (10) dans la paroi latérale (11) du carter (12) d'une vis transporteuse (13), qui au moins transporte et de préférence ramollit également les matières plastiques introduites dans le carter (12), les matières plastiques étant introduites par l'ouverture d'amenée (10) au moyen d'un dispositif d'alimentation (27), le carter (12) de la vis transporteuse (13) comportant, dans sa paroi interne, des poches (23, 24) de grande largeur qui sont disposées dans le sens longitudinal de la vis transporteuse (13) ou bien courbées, au moins sur la plus grande partie de la région axiale de l'ouverture d'amenée (10) et qui accompagnent la vis transporteuse (13), vue selon une coupe perpendiculaire à l'axe de la vis (15), le long de secteurs annulaires, et qui sont séparées entre elles par des nervures (25) étroites par rapport à la largeur des poches (23, 24), l'une (24) de ces poches (23, 24) étant ouverte en direction de l'ouverture d'amenée (10) tandis que l'autre poche (23) est fermée par rapport à l'ouverture d'amenée (10) par une autre nervure (26) de la paroi latérale (11) disposée à proximité immédiate de l'ouverture d'amenée (10), caractérisé en ce que le dispositif d'alimentation (27) des matières plastiques bourre les matières plastiques dans l'ouverture d'amenée (10) sur la vis transporteuse (13) à l'aide d'éléments de mise en mouvement dirigés perpendiculairement à l'axe longitudinal de la vis transporteuse (13) et en ce qu'au moins la nervure (26) disposée près de l'ouverture d'amenée (10) est réglable.

2. Dispositif selon la revendication 1, caractérisé en ce que la profondeur de la poche (24) ouverte en direction de l'ouverture d'amenée (10), mesurée radialement par rapport à la vis transporteuse (13) est constante ou bien augmente en allant dans le sens de la périphérie de la vis transporteuse (13).

3. Dispositif selon l'une ou l'autre des revendications 1 et 2, caractérisé en ce qu'une nervure (25) au moins est disposée du côté de la vis situé diamétralement à l'opposé de l'ouverture d'amenée (10), et constitue, au moins dans la région axiale de la vis transporteuse (13) qui est située au niveau de l'ouverture d'amenée (10) un palier d'appui pour la vis transporteuse (13), afin d'opposer une force de réaction à la contrainte de bourrage exercée par le dispositif d'alimentation (27).

4. Dispositif selon l'une quelconque des revendications 1, 2 et 3, caractérisé en ce que, entre les poches (23, 24), sont disposées des nervures (25) courbées dans le sens du déplacement périphérique de la vis transporteuse (13) et de préférence de façon régulière.

5. Dispositif selon l'une quelconque des revendications 1 à 4, caractérisé en ce que le déplacement périphérique de la vis transporteuse (13) s'effectue en allant de l'ouverture d'amenée (10) vers la poche ouverte (24).

6. Dispositif selon l'une quelconque des revendications 1 à 5, caractérisé en ce que les poches (23, 24) s'étendent des deux côtés, dans la direction axiale de la vis transporteuse (13), au-delà de l'emprise de l'ouverture d'amenée (10).

7. Dispositif selon l'une quelconque des revendications 1 à 6, caractérisé en ce que la profondeur d'au moins une poche (23, 24) diminue progressivement dans le sens de transport de la vis transporteuse (13), de préférence jusqu'à s'annuler, ou bien en ce que la profondeur d'au moins une poche (23, 24) reste d'abord constante dans le sens de transport de la vis transporteuse (13), pour ne diminuer ensuite qu'à partir de l'extrémité axiale de la poche (24, 25) jusqu'à s'annuler.

8. Dispositif selon l'une quelconque des revendications 1 à 7, caractérisé en ce que les poches (23) fermées du côté de l'ouverture d'amenée (10) sont de largeur constante.

9. Dispositif selon l'une quelconque des revendications 1 à 8, caractérisé en ce qu'il est prévu au moins deux poches larges (23, 24), chacune d'elle présentant un angle d'ouverture, mesuré par rapport à l'axe de la vis transporteuse (13), d'au moins 35°.

10. Dispositif selon l'une quelconque des revendications 1 à 9, caractérisé en ce que le rapport entre la largeur des poches (23, 24) et celle des nervures (26), mesurées dans le sens de la circonférence de la vis transporteuse (13) est compris entre 3 et 6, et de préférence entre 4 et 5.

11. Dispositif selon l'une quelconque des revendications 1 à 10, caractérisé en ce que chaque nervure (25) qui délimite la poche (24) ouverte sur l'ouverture d'amenée (10) repose sur le côté de la vis transporteuse (13) diamétralement opposé à l'ouverture d'amenée.

12. Dispositif selon l'une quelconque des revendications 1 à 11, caractérisé en ce que la vis transporteuse (13) est une vis d'extrudeuse dont le diamètre de l'âme augmente en allant du côté de la tête d'extrudeuse.

13. Dispositif selon l'une quelconque des revendications 1 à 12, caractérisé en ce que le dispositif d'alimentation (27) comprend une cuve (1) comportant, au niveau du fond de la cuve, au moins un outil (4) doté d'arêtes de travail (5) et tournant autour d'un axe vertical et qui déchiquette et/ou malaxe les matières plastiques introduites dans la cuve (1) et les pousse dans une ouverture prévue dans la paroi latérale (3) de la cuve (1), ladite ouverture étant en communication avec l'ouverture d'amenée (10) de la paroi latérale (11) du carter (12) de la vis transporteuse (13).

14. Dispositif selon la revendication 13, caractérisé en ce que le côté entrée de la poche (24) ouverte en direction de l'ouverture d'amenée (10) est situé, au moins approximativement, à la hauteur des outils (4) ou de l'un des disques rotoriques (6) portant les outils (4).

15. Dispositif selon l'une ou l'autre des revendications 13 et 14, caractérisé en ce que la poche ouverte (24) comporte un fond (21) qui est incliné en direction des outils (4) ou de l'un des disques rotoriques (6) portant les outils (4).

16. Dispositif selon l'une quelconque des revendications 13 à 15, caractérisé en ce que le déplacement périphérique des outils (4) au niveau de l'ouverture d'amenée (10) s'effectue dans le sens de transport (flèche 16) de la vis transporteuse (13).

17. Dispositif selon l'une quelconque des revendications 13 à 16, caractérisé en ce que la vis transporteuse (13) est disposée, au moins approximativement, tangentiellement à la paroi latérale (3) de la cuve (1).

18. Dispositif selon l'une quelconque des revendications 1 à 12, caractérisé en ce que le dispositif d'alimentation (27) est constitué par une trémie d'alimentation (28) qui communique avec l'ouverture d'amenée (10) et dans lequel est disposée une vis de compactage travaillant en direction de l'ouverture d'amenée (10).

19. Dispositif selon l'une quelconque des revendications 1 à 18, caractérisé en ce que la nervure (26) qui ferme la poche (23) par rapport à l'ouverture d'amenée (10) est réglable.

20. Dispositif selon l'une quelconque des revendications 1 à 19, caractérisé en ce que la nervure réglable (25, 26) est réglable en se rapprochant ou en s'éloignant de la vis transporteuse (13).

21. Dispositif selon l'une quelconque des revendications 1 à 20, caractérisé en ce que deux nervures (25, 26) au moins sont réglables indépendamment l'une de l'autre.

22. Dispositif selon l'une quelconque des revendications 1 à 21, caractérisé en ce que chaque nervure réglable (25, 26) est guidée dans une lumière longitudinale (30) du carter (12) de la vis transporteuse (13) et est couplée à des dispositifs de déplacement de réglage (31).

23. Dispositif selon la revendication 22, caractérisé en ce que les dispositifs de déplacement de réglage (31) sont constitué par des vis de traction (32) et par des vis de pression (33) qui prennent appui sur le carter (12) de la vis transporteuse (13).

24. Dispositif selon la revendication 23, caractérisé en ce qu'il est prévu, pour chaque nervure (25, 26), au moins 2 vis de traction (32) et au moins 2 vis de pression (33), chaque paire de ces vis agissant au niveau de l'extrémité de la nervure (25, 26).

25. Dispositif selon l'une quelconque des revendications 1 à 23, caractérisé en ce que la nervure réglable (25 ou 26) est en forme de coin et est guidée en translation dans le carter (12) de la vis transporteuse (13) dans le sens longitudinal de sa conicité.

26. Dispositif selon l'une quelconque des revendications 1 à 25, caractérisé en ce que la surface (35) dirigée vers la vis transporteuse (13), d'au moins une nervure (25 ou 26), est inclinée.

27. Dispositif selon l'une quelconque des revendications 1 à 24 et 26, caractérisé en ce que l'une au moins des nervures (25, 26) est disposée en biais par rapport à l'axe longitudinal de la vis transporteuse (13) et en ce que sa surface (35) dirigée vers la vis transporteuse (13) a la forme de la périphérie de la vis.

28. Dispositif selon l'une quelconque des revendications 1 à 27, caractérisé en ce qu'une nervure (25) servant d'appui à la vis transporteuse (13) au niveau de l'ouverture d'amenée (10) est disposée à la hauteur de l'axe (15) de la vis transporteuse (13).

29. Dispositif selon l'une quelconque des revendications 1 à 28, caractérisé en ce que la profondeur d'au moins une poche (23, 24), mesurée dans le sens radial de la vis, augmente dans la direction de la circonférence de la vis transporteuse (13).
